# EUROPEAN PATENT SPECIFICATION

(11) **EP 3 546 182 B1**
(45) Date of publication and mention of the grant of the patent: **10.11.2021**
(21) Application number: 19163957.4
(22) Date of filing: 20.03.2019
(51) Int. Cl.: B29C 45/76

(54) **DISPLAY DEVICE FOR OPERATION OF INJECTION MOLDING MACHINE, AND INJECTION MOLDING MACHINE**
ANZEIGEVORRICHTUNG FÜR DEN BETRIEB EINER SPRITZGIESSMASCHINE UND SPRITZGIESSMASCHINE
DISPOSITIF D'AFFICHAGE POUR LE FONCTIONNEMENT D'UNE MACHINE DE MOULAGE PAR INJECTION ET MACHINE DE MOULAGE PAR INJECTION

(30) Priority: 29.03.2018 JP 2018065805
(43) Date of publication of application: 02.10.2019
(73) Proprietor: Sumitomo Heavy Industries, Ltd., Tokyo 141-6025 (JP)
(72) Inventor: YOSHIOKA, Yutaro, Chiba-shi, Chiba, 263-0001 (JP); MATSUKI, Yusuke, Chiba-shi, Chiba, 263-0001 (JP)
(74) Representative: Louis Pöhlau Lohrentz

(56) References cited:
- WO-A1-2007/025396
- DE-A1-102010 046 274
- US-A- 5 539 650
- US-A1- 2010 138 031
- US-A1- 2010 274 379
- "Selogica - the control unit for all ALLROUNDER injection moulding machines", 20020501, 1 May 2002 (2002-05-01), pages 1-31, XP002305034,

## Description

### BACKGROUND OF THE INVENTION

### Field of the Invention

The present invention relates to a display device which is used for operation of an injection molding machine that injects a molding material into a mold unit, and an injection molding machine which is provided with the display device.

### Description of Related Art

As techniques related to this type of display device which is used for operation of an inj ectionmolding machine, there are techniques disclosed in Japanese Unexamined Patent Publication No. 2013-202855, Japanese Unexamined Patent Publication No. 2015-182087, and Japanese Unexamined Patent Publication No. 2015-189055, and US Patent Application US 5 539 650 A, and US Patent Application US 2010/274379 A1, and German Patent Application DE 10 2010 046274 A1, and US Patent Application US 2010/138031 A1 and the like.

Japanese Unexamined Patent Publication No. 2013-202855 discloses an injection molding machine which has an object to "facilitate acquisition and reference of information related to performance values" and has "a control panel which includes a display unit which displays a display screen having a first display area for displaying one or more performance values of an injection molding process, and a control unit which causes, when an arbitrary performance value is selected in the first display area, information related to the selected performance value to be displayed in a second display area different from the first display area on the display screen".

Japanese Unexamined Patent Publication No. 2015-182087 discloses an injection molding machine which is provided in order to solve a problem in an existing injection molding machine, in which "a large number of operation screens are prepared according to the purpose, and thus an operation of displaying a target operation screen is complicated", and includes "an operation unit which accepts an input operation, a display unit which displays an operation screen, and a control unit which causes the operation screen according to an input operation to the operation unit to be displayed on the display unit, in which the operation screen has a search unit which is used for searching in the operation screen".

Japanese Unexamined Patent Publication No. 2015-189055 discloses an injection molding machine which focuses on a problem in that "an injection molding machine malfunctions due to erroneous operation of an operation screen" and includes "a touch panel which includes an operation unit that accepts an input operation and a display unit that displays an operation screen, and a control unit which causes an operation screen according to an input operation to the operation unit to be displayed on the display unit, in which the operation screen displays a plurality of input units on the same screen and the control unit outputs an execution signal for executing apredetermined operation of the injection molding machine in a case where the plurality of input units are operated".

US Patent Application US 5 539 650 A discloses a method of controlling an injection molding machine production process. US Patent Application US 2010/274379 A1 discloses a method for the interactive control of a plastics injection molding machine. German Patent Application DE 10 2010 046274 A1 discloses a method for checking a stored production sequence for an injection molding machine . US Patent Application US 2010/138031 A1 discloses a method for controlling an injection molding machine.

### SUMMARY OF THE INVENTION

Incidentally, in the injection molding machines of the related art, in many cases, one or more kinds of series of operations of a molding process to be performed in the injection molding machine are preset. In such injection molding machines, an operator who operates the injection molding machine cannot greatly change the setting from the preset series of operations.

On the other hand, depending on the specifications of a mold unit which is used together with the injection molding machine, and other situations or conditions, there is a need to desire that an operator personally sets a series of operations in a molding process of the injection molding machine.

However, if the operator is allowed to freely set a series of operations of the injection molding machine, there is not only a case where the injection molding machine does not operate normally, but also a problem in that there is a concern that the machine such as the injection molding machine or the mold unit may be damaged.

The present invention aims to solve such a problem and has an obj ect to provide a display device for operation of an injection molding machine, and an injection molding machine, in which when an operator sets a series of operations of a molding process of the injection molding machine, it is possible to effectively assist in the setting of the operation.

In order to solve such a problem, according to an aspect of the present invention, there is provided a display device which is used for operation of an injection molding machine which injects a molding material into a mold unit, the display device including: a display unit which displays a plurality of operation objects each representing each operation to be performed in a molding process of the injection molding machine; an input unit for inputting selection and disposition of the operation object in order for an operator to construct an array of the operation objects for causing the injection molding machine to perform a series of operations; and a control unit which provides the operator with suggestions to assist in construction of the array of the operation objects, based on at least one information of information on a relationship with an already disposed operation object and information on the mold unit, the information on the mold unit being set in advance in accordance with the mold unit and being stored in a storage unit, in which the display unit displays a setting screen which includes a selection area in which a plurality of selectable operation objects are displayed, and an array area in which a plurality of disposition spaces in which the operation object selected from the selection area by the operator can be disposed are arranged in order of a flow of the molding process, in which at least one of the suggestions is a visually recognizable suggestion which is displayed on the display unit, and in which when the operator selects the disposition space in which the operation object is not disposed, among the disposition spaces of the array area, as the visually recognizable suggestion, the control unit causes one or a plurality of prediction operation objects capable of being disposed in the disposition spaces to be displayed based on the information.

Further, in order to solve the above problem, according to another aspect of the present invention, there is provided an injection molding machine which includes the display device described above.

According to the display device for operation of an injection molding machine, and the injection molding machine described above, when an operator sets a series of operations of a molding process of the injection molding machine, it is possible to effectively assist in the setting of the operation.

### BRIEF DESCRIPTION OF THE DRAWINGS

Fig. 1 is a partial sectional view showing an example of an injection molding machine which can be operated by using a display device according to one embodiment of the present invention.
Fig. 2 is a side view of the injection molding machine of Fig. 1.
Fig. 3 is a block diagram of a controller including the display device of the injection molding machine of Fig. 1.
Fig. 4 is a diagram showing an example of a setting screen which can be displayed on a display unit in Fig. 3.
Figs. 5A and 5B are partially enlarged views showing examples of suggestions to an operator, which can be displayed on the setting screen of Fig. 4.
Fig. 6 is a partially enlarged view showing another example of the suggestion to the operator, which can be displayed on the setting screen of Fig. 4.
Fig. 7 is a partially enlarged view showing still another example of the suggestion to the operator, which can be displayed on the setting screen of Fig. 4.
Fig. 8 is a partially enlarged view showing still yet another example of the suggestion to the operator, which can be displayed on the setting screen of Fig. 4.
Fig. 9 is a diagram showing an example of an array of operation objects constructed on the setting screen of Fig. 4.

### DETAILED DESCRIPTION OF THE INVENTION

Hereinafter, embodiments of the present invention will be described in detail with reference to the drawings.

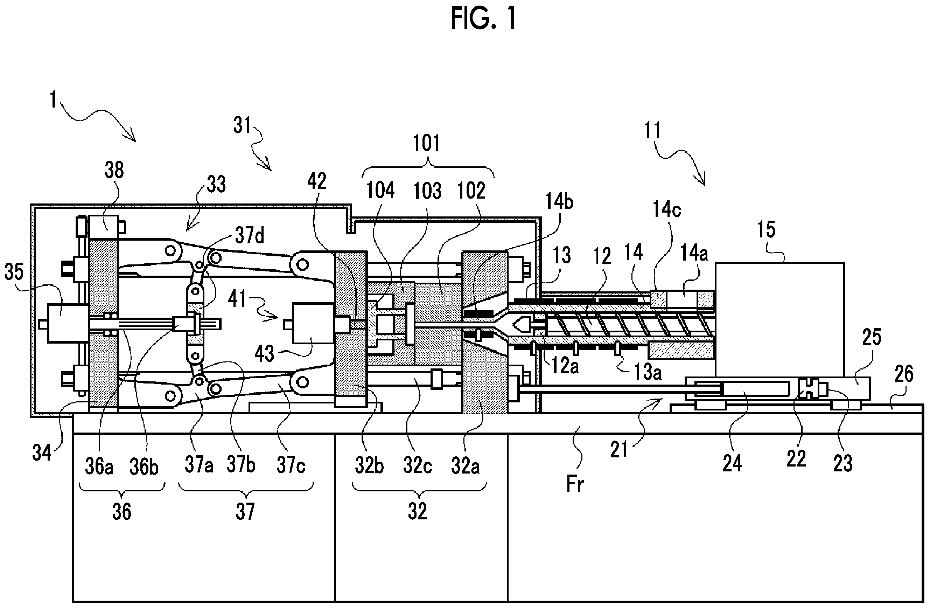

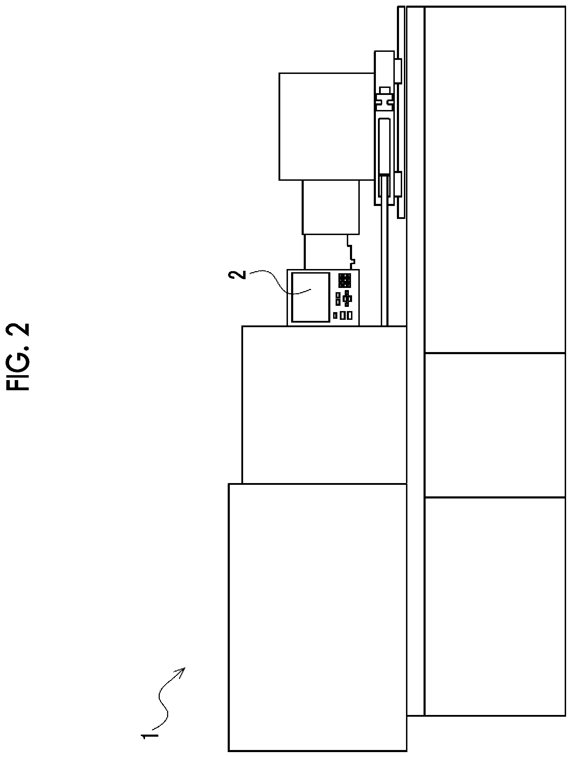

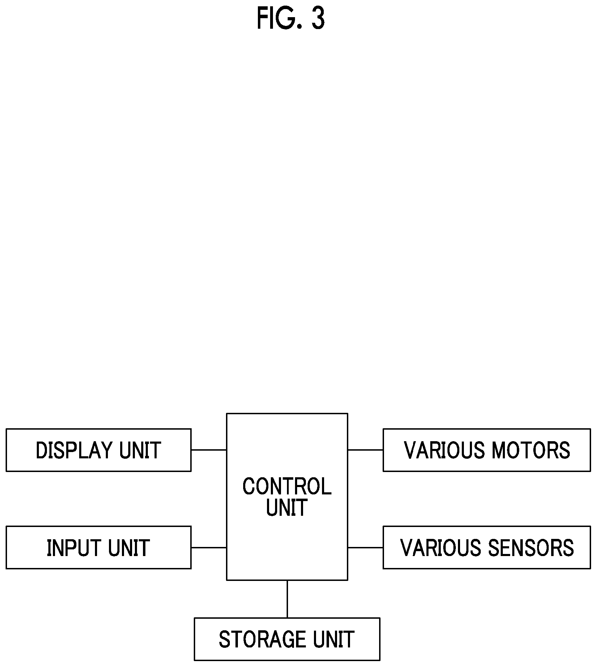

A display device for operation of an injection molding machine according to an embodiment of the present invention can be used in order to operate an injection molding machine 1 as exemplified in the sectional view and the side view in Figs. 1 and 2, respectively. The display device includes a display unit which visually conveys various types of information to an operator of the injection molding machine 1, an input unit for inputting predetermined information for causing the injection molding machine 1 to perform an operation intended by the operator himself or herself, and a control unit which performs a predetermined calculation according to input information or the like, as shown in Fig. 3, for example. The display device generally further includes a storage unit for storing information or data, as shown in Fig. 3. The display unit and at least a part of the input unit of the display device can be, for example, a touch panel 2. However, there is no limitation thereto, and a display device in which the display unit and the input unit are separated from each other is also acceptable.

In Fig. 3, the control unit is also connected to various motors such as a plasticizing motor, an injection motor, and a mold clamping motor of the injection molding machine 1, or various sensors for a temperature, a rotational frequency, and the like, to control the operation of the injection molding machine 1 itself, and the control unit and the storage unit are shared by the injection molding machine 1 and the display device. Therefore, in this embodiment, the control unit not only controls the display contents on the display unit and the input contents at the input unit, as will be described later, as a part of the display device, but also controls the detection of a temperature or the like of a predetermined portion of the injection molding machine 1 and the operation of the injection molding machine 1 according to the detection. However, although not shown in the drawings, the display device can also be configured of an electronic computer or the like, which has a control unit different from the control unit of the injection molding machine 1.

### (Outline of Injection Molding Machine)

The injection molding machine 1 is for manufacturing a molding product having a predetermined shape, for example, by injecting a molding material, which is a resin material mostly such as thermoplastic resin, into a cavity in a mold unit 101, the cavity corresponding to the shape of the molding product to be manufactured using the injection molding machine 1, in a molten state, cooling and curing the molding material in the mold unit 101 to obtain the molding product, and then taking out the molding product from the mold unit 101.

The injection molding machine 1 of Fig. 1, which performs such a molding process, generally includes an injection unit 11 which melts the molding material and injects the molding material toward the interior of the mold unit 101 by rotation and advance of a screw 12 disposed in the interior thereof and heating by a heater 13 disposed in the periphery thereof, a moving unit 21 which advances and retreats the injection unit 11 with respect to the mold unit 101, a mold clamping unit 31 which opens and closes the mold unit 101 between a mold clamping state and a mold open state, and an ejector unit 41 which takes out the molding product from the mold unit 101 in the mold open state.

In the illustrated example, the mold unit 101 which is used in the injection molding machine 1 includes a stationary mold 102 and a movable mold 103, in which the cavity is partitioned and formed inside in the mold clamping state, and a movable member 104 such as an ejector pin which is displaced by the ejector unit 41 to extrude and take out the molding product. The mold unit 101 can be referred to as a two-plate mold which is mainly divided into two molds, that is, the stationary mold 102 and the movable mold 103. However, the mold unit 101 can also be a three-plate mold having a slide mold, a slide core, or a stripper plate and divided into three parts. The mold unit 101 can be appropriately exchanged to be mounted to the injection molding machine 1 according to the shape or the like of a molding product to be manufactured, and here, the mold unit 101 is not regarded as a part of the injection molding machine 1.

An example of the molding process of manufacturing a molding product by using the injection molding machine 1 will be described. A mold clamping process is performed in which the mold clamping state is created by closing the mold unit 101 by using the mold clamping unit 31 in a state where the molding material has already been metered and disposed in a predetermined amount in the interior of the injection unit 11 in the latter half of the previous molding process.

Subsequently, a filling process in which the molding material is injected toward the interior of the mold unit 101 by an advance of the screw 12 and the cavity in the mold unit 101 is filled with the molding material, and a holding pressure process in which the screw 12 is further advanced to hold the molding material inside the tip portion of the injection unit 11 at a predetermined pressure are sequentially performed.

Thereafter, a cooling process is performed in which the molding material filled in the cavity of the mold unit 101 is cooled and cured to obtain a molding product. At this time, a plasticizing process is performed in which the molding material separately introduced into the injection unit 11 is melted while being fed toward the tip portion of the injection unit 11 by the rotation of the screw 12 under the heating by the heater 13 and a predetermined amount of molding material is disposed at the tip portion.

Thereafter, a taking-out process is performed in which the moldopen state is created by opening the mold unit 101 by operating the mold clamping unit 31 and the movable member 104 is moved by the ejector unit 41 to take out the molding product from the mold unit 101.

### (Display device)

In the related art, a series of operations of one kind or plural kinds of molding processes determined in advance, as described above, are set and stored in the storage unit or the like of the injection molding machine 1, and the operator cannot help but operate the injection molding machine 1 according to the operation selected from a series of operations of the preset. That is, in the related art, even if the operator can perform a fine adjustment such as a time adjustment of an operation of each process, it is not possible to make a large setting change on a series of operations of the molding process, such as replacement of an operation of a predetermined process, an order change, removal, or addition.

However, in the injection molding machine 1 in which various mold units 101 can be used, there is a case where it is favorable that the operator himself or herself performs setting of a series of operations in the molding process according to the mold unit 101 or the like which the operator tries to use. Further, it can be said that from the viewpoint of improving the convenience at the time of use of the injection molding machine 1, it is desirable that the operator can personally set a series of operations to be performed in the injection molding machine 1.

On the other hand, if the operator can freely set a series of operations of the molding process to be performed in the injection molding machine 1, there is a concern that the injection molding machine 1 performing various operations under a predetermined constraint in a structure or control, for example, may not be operated normally, and there is also a concern that the injection molding machine 1, the mold unit 101, or the like may be damaged or break down.

In such a situation, in the display device of this embodiment, the display unit displays a plurality of operation objects corresponding to the respective operations to be performed in the molding process of the injection molding machine 1, and the input unit allows the operator to input the selection and disposition of the operation object, whereby the operator can construct an array of operation objects for causing the injection molding machine 1 to perform a series of intended operations. Here, the operation object is displayed on the display unit as an indication of each operation to be performed in the molding process of the injection molding machine 1 and can be set as, for example, an icon obtained by symbolizing each operation with a picture, a character string such as "mold opening", which means each operation, or the like.

In addition, in this embodiment, the control unit of the display device provides the operator with a suggestion to assist in construction of the array of the operation objects, based on at least one information of information on a relationship with the already disposed operation object and previously input information on the mold unit 101. Such information can be stored in the storage unit.

According to this, the control unit can provide the operator with an appropriate suggestion, based on the information on the relationship with the already disposed operation object and/or the previously input information on the mold unit 101, and in this way, it is possible to normally operate the injectionmolding machine 1 while allowing the operator himself or herself to set a series of operations to be performed in the injection molding machine 1.

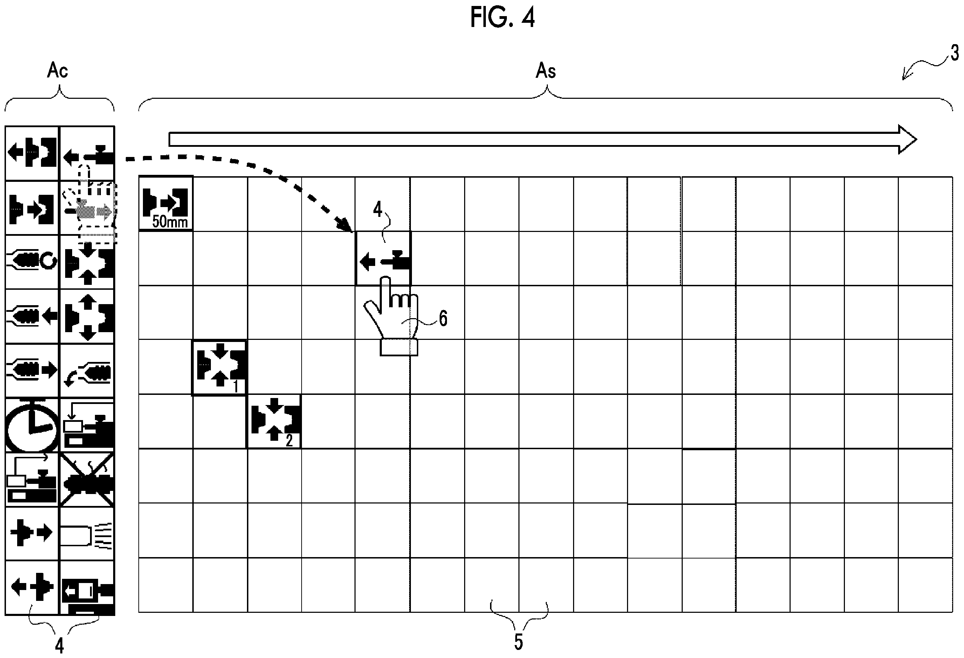

Specifically, the display unit can display a setting screen 3 as illustrated in Fig. 4. The setting screen 3 shown in Fig. 4 includes a selection area Ac where operation objects 4 such as a plurality of selectable operation icons are displayed, and an array area As which has a plurality of disposition spaces 5 in which the operator can dispose the operation object 4 selected from the selection area Ac, and where the plurality of disposition spaces 5 are provided to be arranged in order of a flow of the molding process.

In the setting screen 3, as shown by a white arrow in Fig. 4, it is indicated that the molding process proceeds from the left side toward the right side of Fig. 4. That is, an operation is started from the operation represented by the operation object 4 disposed in the disposition space 5 on the left side of Fig. 4, and thereafter, the respective operations represented by the operation objects 4 disposed in order on the right side thereof are sequentially executed. A direction in which the molding process proceeds, in the setting screen 3, can be a direction from the right side to the left side, which is opposite to the direction shown in the drawing, and can also be not only a right-left direction but also an up-down direction.

The disposition spaces 5 in the up-down direction in Fig. 4 can be used, for example, in a case where the operation objects 4 are disposed to be shifted up and down for easy of viewing or the like or the operation object 4 related to the injection molding machine 1 and the operation object 4 related to the mold unit 101 are arranged to be divided up and down, a case where a plurality of operation objects 4 are disposed up and down in order to perform a plurality of operations at the same time, or the like.

Here, the operation object 4 can be disposed from the selection area Ac to a predetermined disposition space 5 of the array area As by drag-and-drop using a pointer 6 such as a finger mark, as indicated by a dashed arrow in Fig. 4.

A description of each operation which is represented by each operation object 4 is shown in Table 1. However, the operation objects 4 in Table 1 are examples for describing this embodiment, and at least one of these operation objects can be changed in display and/or removed, and as necessary, an operation object which is not shown here can also be added.

**Table 1**

| | | | | | |
|---|---|---|---|---|---|
| Mold opening | 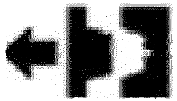 | Open mold to setting position | Injectio n unit advance | 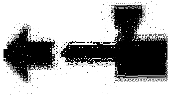 | Move inj ection unit to setting position toward mold clamping unit side |
| Mold closing | 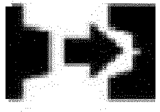 | Close mold to setting position | Injectio n unit retreat | 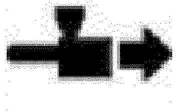 | Move injection unit to setting position in direction away from mold clamping unit |
| Plasticiz ation | 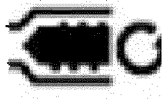 | Prepare a necessary amount of resin for injection by rotating screw | Core insertio n | 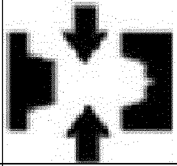 | Insert slide core |
| Screw advance | 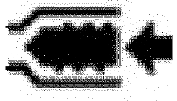 | Advance screw to setting position. Inject plasticized resin. | Core return | 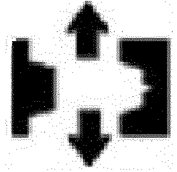 | Return slide core to original position |
| Screw retreat | 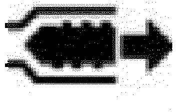 | Retreat screw to setting position | Purge | 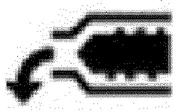 | Perform operation (plasticization and injection) of discharge resin in cylinder by the set number of times. Operation is performed by purge-dedicated plasticization and injection setting. |
| Timer | 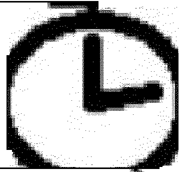 | Delay nest operation according to setting time | Signal input | 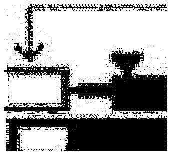 | Confirm that control signal from peripheral equipment has been input |
| Signal output | 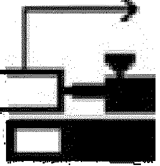 | Output control signal to peripheral equipment | Heater OFF | 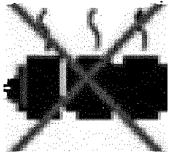 | Turn off power supply of heater for melting resin or peripheral equipment |
| EJ advance | 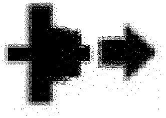 | Push out ejector to setting position. Discharge molding product in mold. | Air Out | 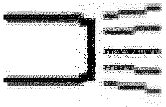 | Send pneumatic air from molding machine to mold. It is used to fall molding product and prevent remaining of molding product in mold. |
| EJ retreat retreat | 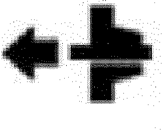 | Return pushed-out ejector to setting position | Safety door opening | 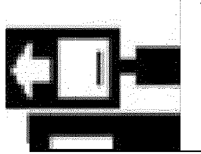 | Open safety door |

Here, after the operator disposes one or more predetermined operation objects 4 in predetermined disposition spaces 5, the control unit provides the operator with a suggestion to assist in construction of the array of the operation objects 4, and therefore, it is preferable to use information on constraint in the relationship between the already disposed operation object 4 and the operation object 4 that the operator tries to dispose next, as the information on the relationship with the already disposed operation object 4.

In particular, it is even more preferable to provide a suggestion relating to whether the disposition of the operation object 4 that the operator tries to dispose is possible or impossible, and a suggestion relating to attention calling. This will be described in detail as follows.

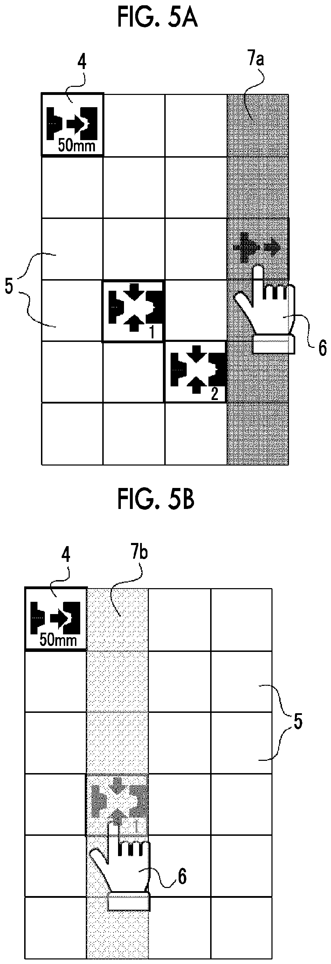

For example, a case is assumed in which the operator has already disposed the operation object 4 that means "mold closing" of the mold unit 101 and two "core insertion" operation objects 4 that mean two-stage slide core insertion, as the operations to be performed sequentially in the flow of the molding process, as shown in Fig. 5A.

In this case, if it is not possible to cause the operation of the operation object 4 of "EJ advance" to be performed immediately after the operation of the operation object 4 of the "core insertion" in the latter stage, for the reason of the structure or the like of the injection molding machine 1, when the operator tries to dispose the operation object 4 of "EJ advance" in the disposition space 5 on the right side of the operation object 4 of "core insertion" in the latter stage, the control unit can provide the operator with a suggestion by assigning a color 7a such as gray that means "disposition impossible" to the disposition space 5 on the right side, or the like. The color 7a can also be displayed in only the disposition space 5 on the right side of the operation object 4 of "core insertion" in the latter stage. However, as shown in Fig. 5A, it is preferable that the color 7a is displayed on all of the disposition space 5 on the right side and the upper and lower disposition spaces 5 above and below it in that all the upper and lower disposition spaces 5 can be recognized as "disposition impossible".

In addition to or instead of the suggestion by the color 7a, although not shown in the drawings, it is also possible to provide a suggestion to display a prohibition mark in the vicinity of the pointer 6 when the pointer 6 dragging the operation object 4 of "EJ advance" approaches the disposition space 5 described above, or a suggestion indicating that the operation object 4 of "EJ advance" dragged by the pointer 6 cannot be actually disposed in the disposition space 5.

In this way, the operator can recognize that the operation object 4 of "EJ advance" cannot be disposed in the disposition space 5 on the right side and is urged so as not to dispose it. As a result, the normal operation of the injection molding machine 1 is guaranteed.

The suggestion of "disposition impossible" described above is assumed to be provided based on the relationship with the operation object 4 (in Fig. 5A, the operation object 4 of "core insertion" in the latter stage) already disposed in the disposition space 5 next to the disposition space 5 of "disposition impossible". However, there is no limitation to the disposition space 5 next to the disposition space 5 of "disposition impossible", and the suggestion can also be provided based on the relationship with the operation object 4 already disposed in the disposition space 5 spaced apart from the disposition space 5 of "disposition impossible" by one or more disposition spaces 5.

Further, as another case, a case is assumed in which the operator has already disposed the operation object 4 of "mold closing" in the disposition space 5 on the leftmost top side, as shown in Fig. 5B.

In this case, for example, in a case of causing the operation of the operation object 4 of "core insertion" to be performed after the operation of the operation object 4 of "mold closing", if it is required that the mold unit 101, the injection molding machine 1, or the like has special specifications, when the operator tries to dispose the operation object 4 of "core insertion" in the right disposition space 5 on the right side of the operation object 4 of "mold closing", or the like, the control unit can provide the operator with a suggestion by assigning a color 7b such as yellow which means "attention calling" to the disposition space 5 on the right side and as necessary, all the disposition spaces 5 above and below it, or the like. In this case, the mold unit 101 needs to have a structure having a slide core, and therefore, at the time of disposition by the operator, the color 7b meaning "attention calling" is displayed.

As a result of the urged attention, the operator provided with the suggestion of "attention calling" can confirm whether or not the mold unit 101 or the like has special specifications in which the operation of "core insertion" can be performed, and therefore, also in this case, the injection molding machine 1 operates normally, and thus breakage or the like of the injection molding machine 1 can be prevented.

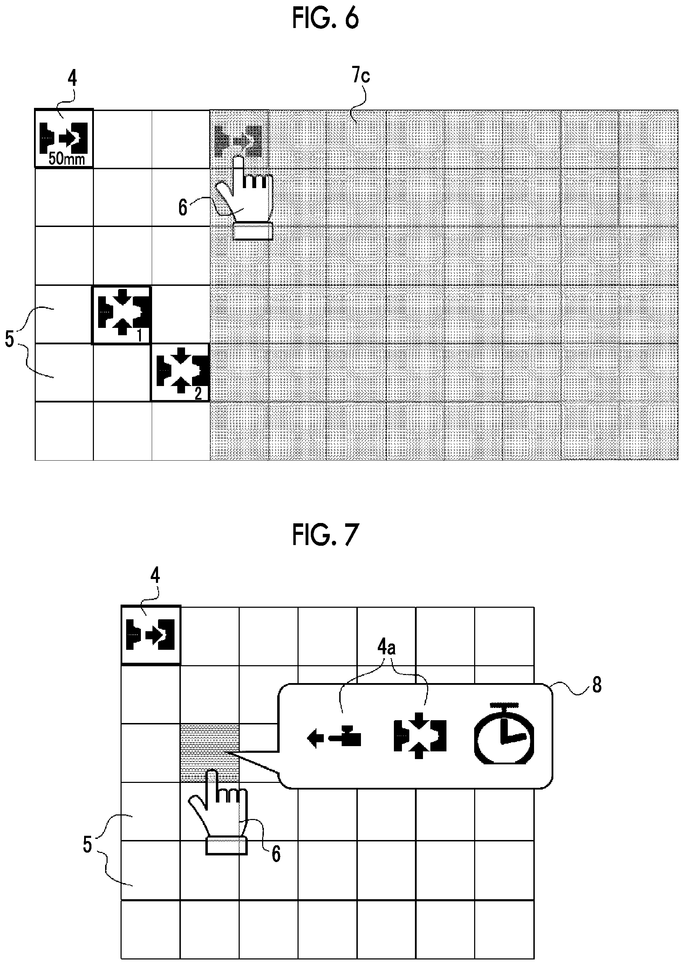

On the other hand, in a case where the operation object 4 that the operator tries to dispose in a predetermined disposition space 5 can be disposed without any problem, as shown in Fig. 6, it is possible to provide the operator with a suggestion by assigning a color 7c such as blue which means "disposition possible" to the disposition space 5 or all the other disposition spaces 5 in which the operation object 4 can be disposed.

According to this, the operator can recognize the problem-free disposition of the operation object 4, and therefore, it is possible to more quickly and reliably perform the construction of the array of the operation objects 4.

It is sufficient if it can be determined that the suggestion of "disposition possible" is different from the suggestion such as "disposition impossible", and therefore, in a case of displaying the suggestion such as "disposition impossible" by the color 7a or the like, it is not necessary to necessarily assign the color 7c as the suggestion of "disposition possible" .

It is preferable that at least one of hue, saturation, and lightness is different from each other between the color 7a meaning "disposition impossible", the color 7b meaning "attention calling", and the color 7c meaning "disposition possible", and it is desirable to select those in which the differences between them can be recognized as easily as possible.

In the above, the visually recognizable suggestions have been described mainly. However, in addition to the display of the color 7a meaning "disposition impossible", the color 7b meaning "attention calling", or the like, a suggestion which can be recognized with auditory sense or the like by output of a warning sound or other sound that means "disposition impossible", "attention calling", or the like can also be adopted.

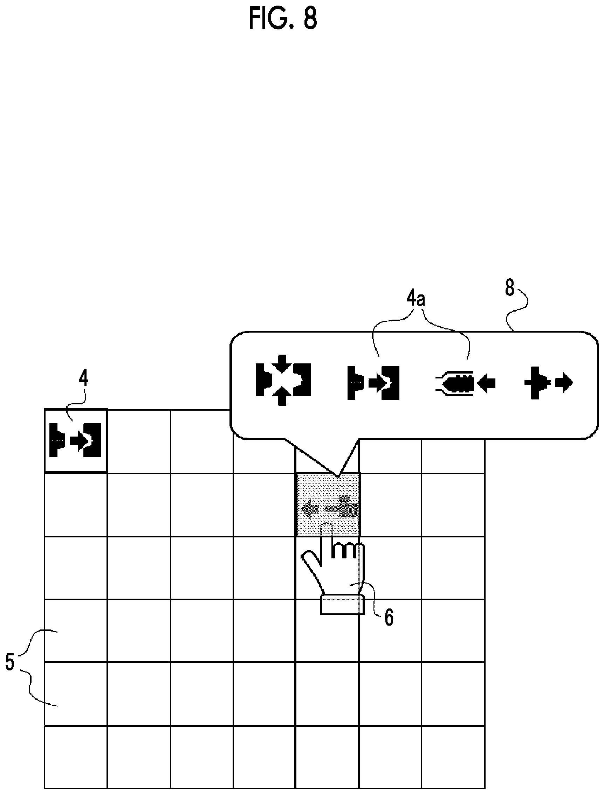

Further, as another example of the visually recognizable suggestion, it is also possible to display prediction operation objects 4a as shown in Figs. 7 and 8.

In Fig. 7, for example, in a state where the operation object 4 of "mold closing" has been already disposed in the disposition space 5 on the leftmost top side, in a case where the operator causes the pointer 6 to be located on the disposition space 5 on the right side of the disposition space 5 in which the operation object 4 of "mold closing" is present, or selects the disposition space 5 by tapping, clicking, or the like, the control unit causes a predetermined prediction operation object 4a to be displayed at a predetermined position in the vicinity of the disposition space 5 or the like by using a balloon 8 in the illustrated example .

As the prediction operation object 4a, the operation object 4 that can be disposed in the disposition space 5 selected by the pointer 6 is extracted from among a plurality of selectable operation objects 4, based on at least one information of the information on the relationship with the already disposed operation object 4 (in Fig. 7, the operation object 4 of "mold closing") and the previously input information on the mold unit 101. The prediction operation object 4a can be one or a plurality of operation objects 4, and the number of the operation objects 4 which are displayed can be changed according to the above information or the like.

By the display of the prediction operation object 4a as shown in Fig. 7, the operator is provided with a suggestion relating to the operation object 4 that can be disposed in the disposition space 5 in which the pointer 6 is located, and it is possible to effectively assist in construction of the array of the operation objects 4 by the operator. Further, in this case, it is possible to reduce the labor of the operator to select the operation object 4 from among a large number of operation objects 4 in the selection area Ac by moving the pointer 6 to the selection area Ac and move the selected operation object 4 to the array area As.

Fig. 8 shows a situation in which the operation object 4 of "mold closing" is disposed in the disposition space 5 on the leftmost top side and the operation object 4 of "injection unit advance" is disposed in the disposition spaces 5 spaced apart from the operation object 4 of "mold closing" to the right side by some empty disposition spaces. Under this situation, in a case where the operator selects the operation object 4 of "injection unit advance" by causing the pointer 6 to be located on the operation object 4 of "injection unit advance", by tapping or clicking the operation object 4 of "injection unit advance", or the like, the control unit can cause the prediction operation objects 4a to be displayed together with the balloon 8, for example, at a predetermined position in the vicinity of the operation object 4 of "injection unit advance", or the like.

As the prediction operation objects 4a, the operation objects 4 which can be disposed in the disposition spaces 5 on the upper side, the lower side, the right side, and the left side of the operation object 4 of "injection unit advance" indicated by the pointer 6 are extracted based on the above information. That is, in the flow of the molding process by the injection molding machine 1, the operation object 4 of the operation which can be performed at the same time as the operation of the operation object 4 of "injection unit advance" pointed by the pointer 6, or the operation which can be performed before or after the operation of the operation object 4 is extracted as the prediction operation object 4a. The prediction operation object 4a here can be at least one which is selected from the group consisting of the operation object 4 which can be disposed in the disposition space 5 as the operation to be performed at the same time as the operation object 4 (in the illustrated example, the operation object 4 of "injection unit advance") selected by the operator, and the operation objects 4 which can be disposed in the disposition spaces 5 as the operations to be performed before and after the operation object 4 selected by the operator.

By causing the prediction operation objects 4a to be displayed as shown in Fig. 8, the operator is provided with suggestions relating to the operation objects 4 which can be disposed at the top, bottom, right, left, and the like of the operation object 4 already disposed in the disposition space 5, and thus the construction of the array of the operation objects 4 becomes easy. In particular, in the example shown in Fig. 8, after one operation object 4 is disposed in a predetermined disposition space 5, it becomes possible to dispose the operation objects 4 one after another, on the basis of the prediction operation objects 4a which are displayed in relation to the operation object 4, and therefore, it is possible to more easily and quickly construct the array of the operation objects 4.

In addition to the operation objects 4 which can be disposed in the disposition spaces 5 on the right side and the left side of the operation object 4 of "injection unit advance", the operation object 4 which can be disposed in the disposition space 5 spaced apart by two or more disposition spaces to the right side or the left side may be displayed as the prediction operation object 4a.

In Fig. 7 or 8, the operation object 4 which is recognized as being unable to be disposed in a predetermined disposition space 5 with reference to the information described above can be determined not to be displayed as the prediction operation object 4a. In this case, abnormal operation of the injection molding machine 1 is effectively suppressed.

Further, in determining the prediction operation object 4a, it is preferable that the control unit uses information on the high and low of a disposition frequency of the operation object 4 which is disposed in the disposition space 5 indicated by the pointer 6 in Fig. 7 or the disposition spaces 5 on the top, bottom, right, left, and the like of the operation object 4 indicated by the pointer 6 in Fig. 8, in addition to the information on the relationship with the already disposed operation object 4. The information on the high and low of the disposition frequency of the operation object 4 in the disposition space 5 is acquired at the stage of the previous operation or action of the injection molding machine 1 with respect to the combination, the order, or the like of the operation objects 4, and/or acquired and transmitted at the stage of the previous operation or action of another injection molding machine 1, and it is possible to rank the order of the disposition frequencies from data stored in the storage unit or the like. In this way, the operator is released from the trouble of finding the operation object 4 that the operator tries to dispose next, and thus it is possible to construct the array of the operation objects 4 in a shorter time. In a case of displaying the prediction operation object 4a by using the information on the high and low of the disposition frequency, it is also possible to associate the high and low of the disposition frequency with the mode of display, such as arrangement from the left side to the right side in descending order of the disposition frequencies in the balloon 8, for example.

Incidentally, as information on the mold unit 101 that the control unit can refer to when providing the operator with the suggestions as described above, there is information on the presence or absence of the slide core in the mold unit 101, information on the number of divisions of the mold unit 101 (for example, information on whether it is a two-plate mold or a three-plate mold, or the like), information on the amount of protrusion of the ejector pin with respect to the mold unit 101, information on whether or not the ejector unit can be used for the mold unit 101, or the like, and it is preferable to include at least one information of these. Such information differs according to the mold unit 101 which is used together with the injection molding machine 1, and can be set in advance in accordance with the mold unit 101 which is actually used.

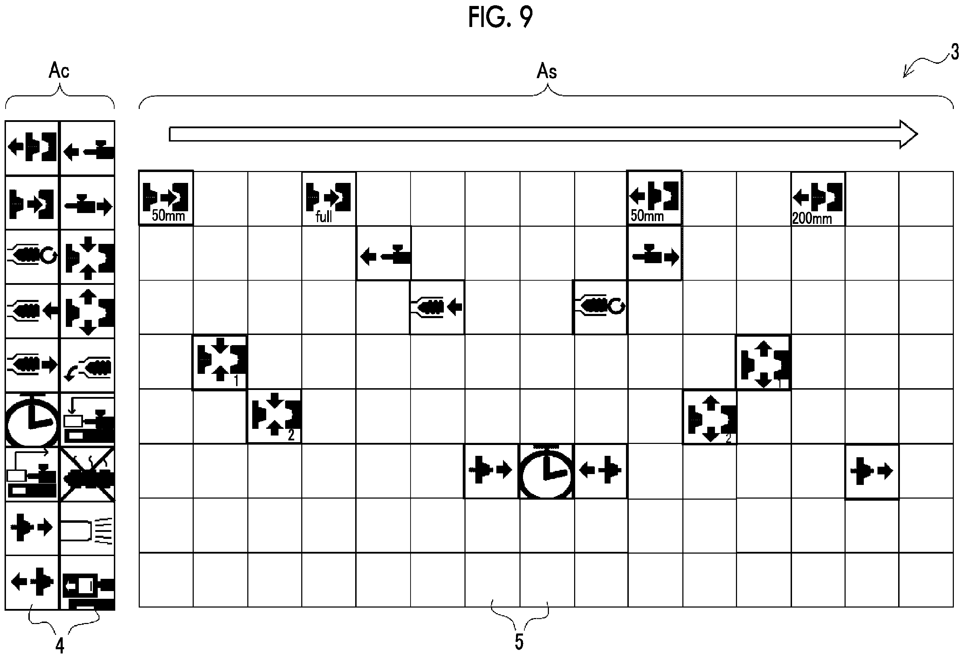

The operator is provided with the suggestions as described above, thereby being able to construct the array of the operation objects 4 as shown in Fig. 9, for example, in the array area As of the setting screen 3, and the injection molding machine 1 which operates according to such an array of the operation objects 4 can normally operate with higher probability.

According to the array of the operation objects 4 shown as an example in Fig. 9, in the molding process, the injection molding machine 1 first performs the operation of performing "mold closing" of 50 mm, the operation of "core insertion" in two stages, the operation of performing complete "mold closing", the operation of "injection unit advance", and the operation of "screw advance" in order from the operation object 4 disposed on the left side of the array area As. Subsequently, the injection molding machine 1 performs the operation of "EJ advance" and then performs the operation of "plasticization" and the operation of "EJ retreat" after a predetermined setting time from the operation of "EJ advance". Thereafter, the operation of performing "mold opening" of 50 mm and the operation of "injection unit retreat" are performed at the same time, and after the operation of "core return" in two stages is performed, the operation of "mold opening" of 200 mm is performed, and finally, the operation of "EJ advance" is performed.

In the illustrated embodiment, the displays such as "50 mm", "1", "2", and "full" at the lower portions of the operation objects 4 disposed in the array area As mean detailed settings of the operation objects 4. For example, the display of the length such as "50 mm" or the display of "full" in the operation object 4 of "mold opening" or "mold closing" means the movement distance and the degree of the movable mold 103 of the mold unit 101 at the time of mold opening or mold closing. Such detailed settings can be appropriately performed by the operator on another setting screen (not shown) or the like, which is displayed by selecting the operation object 4 of the array area As, or the like.

### (Injection Unit)

The injection unit 11 mainly includes a cylinder 14 having a cylindrical shape or the like and extending toward the mold unit 101, the screw 12 which is disposed in the cylinder 14 so as to have a central axis parallel thereto and has a flight provided in a spiral shape at the periphery thereof, the heater 13 having a band shape or the like and disposed on the outer periphery side of the cylinder 14 to surround the cylinder 14, and a motor box 15 disposed on the rear side of the cylinder 14 and the screw 12. Although not shown in the drawings, a plasticizing motor for rotating the screw 12 about the central axis thereof in order to fill the tip portion of the cylinder 14 with a predetermined amount of molding material, an injection motor for advancing and retreating the screw 12 in each direction of the direction approaching the mold unit 101 and the direction away from the mold unit 101, a pressure detection sensor for detecting the pressure that the screw 12 receives from the molding material, and the like are disposed in the motor box 15.

Here, a direction approaching a stationary platen 32a (described later) of the mold clamping unit 31, to which the stationary mold 102 of the mold unit 101 is mounted, is defined as the front side, and a direction away from the stationary platen 32a is defined as the rear side. Therefore, in Fig. 1, with respect to the injection unit 11 which is located on the right side of the stationary platen 32a, a leftward direction approaching the stationary platen 32a is the front side and a rightward direction away from the stationary platen 32a is the rear side.

In the cylinder 14, a feed port 14a, to which a hopper for introducing the molding material into the cylinder 14 can be mounted, is provided on the rear side ahead of the motor box 15, and a nozzle 14b having a smaller cross-sectional area toward the front side is provided at a tip portion close to the mold unit 101. A cooler 14c by water cooling or the like can be provided near the feed port 14a.

The heater 13 which is disposed on the periphery of the cylinder 14 including the periphery of the nozzle 14b is divided into a plurality of portions in an axial direction (a right-left direction in Fig. 1), for example, as shown in the drawing, and the interiors of the cylinder 14 inside the respective heater portions can be heated at different temperatures. A temperature sensor 13a can be provided at each heater portion.

A backflow prevention ring 12a which advances and retreats along with the screw 12 to prevent the molding material fed further toward the front side than it from flowing back toward the rear side is disposed around a constricted portion provided having a partially reduced outer diameter on the tip side of the screw 12 . The backflow prevention ring 12a is displaced back and forth with respect to the screw 12, for example, in response to the pressure that the backflow prevention ring 12a receives from the molding material which is located further on the front side or the rear side than the backflow prevention ring 12a, and in this way, only the flow of the molding material from the rear side toward the front side is permitted.

According to the injection unit 11 having such a configuration, in the plasticizing process, the molding material introduced into the cylinder 14 from the feed port 14a is fed toward the front side in the interior of the cylinder 14 while being melted based on the rotation of the screw 12 which is driven by the plasticizing motor, under heating by the heater 13 on the outer periphery side of the cylinder 14, and is filled into the tip portion of the cylinder 14. At this time, the screw 12 is retreated by the injection motor, and thus a space which is filled with the molding material is formed at the tip portion of the cylinder 14. As described above, thisplasticizingprocess can be performed during a cooling process or the like of the previous molding process.

Thereafter, in the filling process, the screw 12 is advanced, whereby the molding material in the tip portion of the cylinder 14 is injected toward the mold unit 101 through the nozzle 14b. In the subsequent holding pressure process, pressure is applied to the molding material filled in the cavity of the mold unit 101 through the molding material remaining at the tip portion of the cylinder 14. At this time, it is possible to replenish a shortage of the molding material due to cooling contraction of the molding material in the cavity of the mold unit 101.

The injection molding machine 1 is an inline screw type. However, the injection molding machine 1 can also be a pre-plasticating type injection molding machine which is structurally and functionally separated into a plasticizing cylinder and a plasticizing screw, and an injection cylinder and an injection plunger.

### (Moving Unit)

The moving unit 21 is, for example, an advance and retreat drive mechanism which is provided at a lower part or the like of the motor box 15 of the injection unit 11 and advances and retreats the injection unit 11 with respect to the stationary platen 32a (described later).

As the advance and retreat drive mechanism configuring the moving unit 21, various mechanisms can be adopted. However, the moving unit 21 shown in the drawing is configured to include a hydraulic pump 22 such as an oil pressure pump, a pump operation motor 23 such as an electric motor for operating the hydraulic pump 22, and a double acting hydraulic cylinder 24 to which a hydraulic fluid is supplied from the hydraulic pump 22 to push out and retract a piston rod fixed to the stationary platen 32a at the tip thereof.

The moving unit 21 further includes a slide base 25 to which the hydraulic pump 22, the pump operation motor 23, and the hydraulic cylinder 24 described above are mounted, and a linear guide 26 laid on a frame Fr to guide the linear motion of the slide base 25, and in this way, the advance and retreat of the injection unit 11 placed on the upper portion of the slide base 25 is realized.

By the moving unit 21, the injection unit 11 is moved away from the mold unit 101 or the injection unit 11 approaches the mold unit 101, so that it becomes possible to perform so-called nozzle touch in which the nozzle 14b of the cylinder 14 of the injection unit 11 is pressed against the mold unit 101 at a predetermined pressure.

### (Mold Clamping Unit)

The mold clamping unit 31 displaces the movable mold 103 with respect to the stationary mold 102 of the mold unit 101 to open and close the mold unit 101, thereby causing the mold unit 101 to be in the mold clamping state, the mold closed state, or the mold open state . The mold clamping unit 31 of the injection molding machine 1 mainly includes a platen 32 which is disposed with the mold unit 101 sandwiched from both sides, and a platen operation mechanism 33 for operating the platen 32.

Here, the platen 32 includes the stationary platen 32a located between the injection unit 11 and the mold unit 101 and fixed to the frame Fr, a movable platen 32b located with the mold unit 101 between itself and the stationary platen 32a and capable of moving toward and away from the stationary platen 32a, and one or a plurality of tie bars 32c which are mounted to the stationary platen 32a and guides the displacement of the movable platen 32b.

Here, the stationary mold 102 of the mold unit 101 which is located between the stationary platen 32a and the movable platen 32b is mounted to the stationary platen 32a side, and the movable mold 103 is mounted to the movable platen 32b side.

At a position where the movable platen 32b is spaced apart from the stationary platen 32a, the mold open state where the movable mold 103 of the mold unit 101 is opened from the stationary mold 102 is created, and the movable platen 32b comes close to the stationary platen 32a from the spaced-apart position, whereby the mold closed state where the movable mold 103 is closed with respect to the stationary mold 102, and the movable platen 32b further comes close to the stationary platen 32a, whereby the mold clamping state where the movable mold 103 is pressed against the stationary mold 102 is created.

The most part of the mold clamping unit 31 excluding the stationary platen 32a, and the ejector unit 41 (described later) are located on the left side of the stationary platen 32a in Fig. 1, and therefore, with respect to the most part of the mold clamping unit 31 and the ejector unit 41, the rightward direction approaching the stationary platen 32a is the front side and the leftward direction away from the stationary platen 32a is the rear side.

Further, here, the platen operation mechanism 33 includes a rear platen 34 disposed on the frame Fr, a mold clamping motor 35 provided on the rear platen 34, a motion conversion mechanism 36 which converts the rotary motion of the mold clamping motor 35 into a linear motion in the displacement direction of the movable platen 32b, and a toggle mechanism 37 which increases the force transmitted to the motion conversion mechanism 36 and transmits it to the movable platen 32b.

Among them, the motion conversion mechanism 36 can be any of various mechanisms capable of converting rotary motion into linear motion. However, in this example, the motion conversion mechanism 36 is configured to include a screw shaft 36a which is rotationally driven by the mold clamping motor 35, and a nut 36b which meshes with the screw shaft 36a. It is also possible to use a ball screw as the motion conversion mechanism 36.

The toggle mechanism 37 which increases the transmission force from the motion conversion mechanism 36 includes a plurality of links 37a to 37c connecting the rear platen 34 and the nut 36b to the movable platen 32b and connected to be swingable at joints.

The number of links and joints and the shapes thereof can be appropriately changed. However, in Fig. 1, a pair of link groups composed of the links 37a to 37c which are located up and down with a crosshead 37d therebetween are provided to be swingably connected to the crosshead 37d which is connected to the nut 36b and extends in the up-down direction.

In addition to the mold clamping motor 35 described above, a mold thickness adjusting motor 38 can also be provided on the rear platen 34. The mold thickness adjusting motor 38 functions so as to be able to adjust the distance between the stationary platen 32a and the rear platen 34 disposed so as to be movable on the frame Fr through a rail, by applying a rotational driving force to the screw shaft and the nut connected to an extended portion of each tie bar 32c of the platen 32 described above. In this way, even when exchange of the mold unit 101, a change of the thickness of the mold unit 101 due to a temperature change, or the like is performed, it is possible to adjust the mold thickness such that a desired mold clamping force can be applied to the mold unit 101. Although not shown in the drawings, it is possible to realize adjustment of the mold thickness even if the stationary platen side is movable on the frame Fr and the rear platen side is fixed.

The mold clamping unit 31 shown in the drawing is a horizontal type in which the moving direction of the movable platen 32b is parallel to the horizontal direction. However, it is also possible to adopt a vertical type in which the moving direction is a vertical direction.

### (Ejector Unit)

The ejector unit 41 which is provided at the movable platen 32b includes an ejector rod 42 which extends through the movable platen 32b and is driven to advance and retract so as to push the movable member 104 such as the ejector pin of the mold unit 101 from the rear side, and a rod drive source 43 which includes a motion conversion mechanism such as a motor and a ball screw, for example, in order to operate the ejector rod 42.

By the ejector unit 41, in the process of taking out the molding product, the ejector rod 42 which is driven by the rod drive source 43 is advanced, whereby it becomes possible to push out the movable member 104 in the mold unit 101 to take out the molding product from the mold unit 101. After the movable member 104 is pushed out, the ejector rod 42 can be retreated by the rod drive source 43 to return to the original position.

### (Controller)

In this example, as described above, a part of a controller configures the display device. However, as shown in Fig. 3, the controller includes the control unit, the display unit, the input unit, and the storage unit and is connected to various sensors and motors of the injection molding machine 1. Although not shown in the drawings, the controller can further include an input interface, an output interface, or the like.

In this way, the controller performs monitoring with reference to signals which are transmitted from various sensors, and can operate the injection molding machine 1 according to the array of the operation objects 4 set on the display device by the operator.

### Brief Description of the Reference Symbols

- 1:: injection molding machine
- 2:: touch panel
- 3:: setting screen
- 4:: operation object
- 4a:: prediction operation object
- 5:: disposition space
- 6:: pointer
- 7a to 7c:: color
- 8:: balloon
- 11:: injection unit
- 12:: screw
- 12a:: backflow prevention ring
- 13:: heater
- 13a:: temperature sensor
- 14:: cylinder
- 14a:: feed port
- 14b:: nozzle
- 14c:: cooler
- 15:: motor box
- 21:: moving unit
- 22:: hydraulic pump
- 23:: pump operation motor
- 24:: hydraulic cylinder
- 25:: slide base
- 26:: linear guide
- 31:: mold clamping unit
- 32:: platen
- 32a:: stationary platen
- 32b:: movable platen
- 32c:: tie bar
- 33:: platen operation mechanism
- 34:: rear platen
- 35:: mold clamping motor
- 36:: motion conversion mechanism
- 36a:: screw shaft
- 36b:: nut
- 37:: toggle mechanism
- 37a to 37c:: link
- 37d:: crosshead
- 38:: mold thickness adjusting motor
- 41:: ejector unit
- 42:: ejector rod
- 43:: rod drive source
- 101:: mold unit
- 102:: stationary mold
- 103:: movable mold
- 104:: movable member
- Ac:: selection area
- As:: array area
- Fr:: frame

## Claims

1. A display device which is used for operation of an injection molding machine (1) which injects a molding material into a mold unit (101), the display device comprising:
a display unit configured to display a plurality of operation objects (4) representing operations to be performed in a molding process of the injection molding machine (1);
an input unit to which selection and disposition of the operation object (4) are input by an operator in order to construct an array of the operation objects (4) for causing the injection molding machine (1) to perform a series of operations; and
a control unit configured to provide the operator with suggestions to assist in construction of the array of the operation objects (4), based on at least one information of information on a relationship with an already disposed operation object (4) and information on the mold unit (101), the information on the mold unit (101) being set in advance in accordance with the mold unit (101) and being stored in a storage unit,
wherein the display unit is configured to display a setting screen (3) which includes
a selection area (Ac) in which a plurality of selectable operation objects (4) are displayed, and
an array area (As) in which a plurality of disposition spaces (5) in which the operation object (4) selected from the selection area (Ac) by the operator can be disposed are arranged in order of a flow of the molding process,
wherein at least one of the suggestions is a visually recognizable suggestion which is displayed on the display unit, and
wherein when the operator selects the disposition space (5) in which the operation object (4) is not disposed, among the disposition spaces (5) of the array area (As), as the visually recognizable suggestion, the control unit is configured to cause one or a plurality of prediction operation objects (4a) capable of being disposed in the disposition spaces (5) to be displayed based on the information.

2. The display device according to claim 1, wherein the information on the relationship with the already disposed operation object (4) includes information on a constraint relating to a relationship between an operation object (4) which the operator tries to dispose, and the already disposed operation object (4) as an operation to be performed at the same time as or before or after the operation object (4) in the series of operations of the molding process.

3. The display device according to claim 1 or 2, wherein at least one of the suggestions is a visually recognizable suggestion which is displayed on the display unit, and
wherein as the visually recognizable suggestion, a suggestion relating to whether or not to dispose the operation object (4) which the operator tries to dispose, and a suggestion relating to attention calling are displayed on the display unit.

4. The display device according to claim 1,
wherein when the operator selects an operation object (4) already arranged in the disposition space (5) of the array area (As), as the visually recognizable suggestion, the control unit causes one or a plurality of prediction operation objects (4a) capable of being disposed in the disposition spaces (5) as operations to be performed at the same time as and/or before and/or after the operation object (4) in the series of operations of the molding process to be displayed based on the information.

5. The display device according to claim 1, wherein the control unit is configured to determine the prediction operation object (4a), based on the information on the relationship with the already disposed operation object (4) and information on a disposition frequency of the operation object (4) in the disposition spaces (5).

6. The display device according to any one of claims 1 to 5, wherein the information on the mold unit (101) includes at least one information which is selected from the group consisting of information on presence or absence of a slide core in the mold unit (101), information on the number of divisions of the mold unit (101), information on an amount of protrusion of an ejector pin with respect to the mold unit (101), and information on whether or not an ejector unit can be used for the mold unit (101).

7. An injection molding machine comprising the display device according to any one of claims 1 to 6.

## Patentansprüche

1. Anzeigevorrichtung, die zum Bedienen einer Spritzgießmaschine (1) verwendet wird, welche ein Formmaterial in eine Formeinheit (101) einspritzt, wobei die Anzeigevorrichtung umfasst:
eine Anzeigeeinheit, die konfiguriert ist, mehrere Bedienobjekte (4) anzuzeigen, welche Vorgänge darstellen, die in einem Formprozess der Spritzgießmaschine (1) durchgeführt werden sollen;
eine Eingabeeinheit, an der Auswahl und Disposition des Bedienobjekts (4) durch einen Bediener eingegeben werden, um ein Array der Bedienobjekte (4) zu konstruieren, um die Spritzgießmaschine (1) zu veranlassen, eine Reihe von Vorgängen durchzuführen; und
eine Steuereinheit, die konfiguriert ist, dem Bediener Vorschläge, um bei Konstruktion des Arrays der Bedienobjekte (4) zu unterstützen, basierend auf zumindest einer Information von Informationen über eine Beziehung mit einem bereits disponierten Bedienobjekt (4) und Informationen über die Formeinheit (101), bereitzustellen, wobei die Informationen über die Formeinheit (101) vorab gemäß der Formeinheit (101) eingestellt werden und in einer Speichereinheit gespeichert werden,
wobei die Anzeigeeinheit konfiguriert ist, einen Einstellungsbildschirm (3) anzuzeigen, welcher umfasst
einen Auswahlbereich (Ac), in dem mehrere auswählbare Bedienobjekte (4) angezeigt werden, und
einen Arraybereich (As), in dem mehrere Dispositionsräume (5), in denen das Bedienobjekt (4), welches aus dem Auswahlbereich (Ac) durch den Bediener ausgewählt wird, disponiert werden kann, in einer Reihenfolge eines Ablaufs des Formprozesses angeordnet sind,
wobei zumindest einer der Vorschläge ein visuell erkennbarer Vorschlag ist, der an der Anzeigeeinheit angezeigt wird, und
wobei, wenn der Bediener den Dispositionsraum (5), in dem das Bedienobjekt (4) nicht disponiert ist, unter den Dispositionsräumen (5) des Arraybereichs(As) als den visuell erkennbaren Vorschlag auswählt, die Steuerungseinheit konfiguriert ist zu veranlassen, dass ein oder mehrere Vorhersagebedienobjekte (4a), die in den Dispositionsräumen (5) disponiert werden können, basierend auf den Informationen angezeigt werden.

2. Anzeigevorrichtung nach Anspruch 1, wobei die Informationen über die Beziehung mit dem bereits disponierten Bedienobjekt (4) Informationen über eine Beschränkung in Bezug auf eine Beziehung zwischen einem Bedienobjekt (4), das der Bediener versucht zu disponieren, und dem bereits disponierten Bedienobjekt (4), als einen Vorgang, der gleichzeitig mit oder vor oder nach dem Bedienobjekt (4) in der Reihe von Vorgängen des Formprozesses durchgeführt werden soll, umfassen.

3. Anzeigevorrichtung nach Anspruch 1 oder 2, wobei zumindest einer der Vorschläge ein visuell erkennbarer Vorschlag ist, der an der Anzeigeeinheit angezeigt wird, und
wobei als der visuell erkennbare Vorschlag ein Vorschlag in Bezug darauf, ob das Bedienobjekt (4), das der Bediener versucht zu disponieren, zu disponieren ist oder nicht, und ein Vorschlag in Bezug auf Wecken von Aufmerksamkeit an der Anzeigeeinheit angezeigt werden.

4. Anzeigevorrichtung nach Anspruch 1,
wobei, wenn der Bediener ein Bedienobjekt (4), das bereits in dem Dispositionsraum (5) des Arraybereichs (As) angeordnet ist, als den visuell erkennbaren Vorschlag auswählt, die Steuereinheit veranlasst, dass ein oder mehrere Vorhersagebedienobjekte (4a), die in den Dispositionsräumen (5) disponiert werden können, als Vorgänge, die gleichzeitig und/oder vor und/oder nach dem Bedienobjekt (4) in der Reihe von Vorgängen des Formprozesses durchgeführt werden sollen, basierend auf den Informationen angezeigt werden.

5. Anzeigevorrichtung nach Anspruch 1, wobei die Steuereinheit konfiguriert ist, das Vorhersagebedienobjekt (4a) basierend auf den Informationen über die Beziehung mit dem bereits disponierten Bedienobjekt (4) und Informationen über eine Dispositionsfrequenz des Bedienobjekts (4) in den Dispositionsräumen (5) zu bestimmen.

6. Anzeigevorrichtung nach einem der Ansprüche 1 bis 5, wobei die Informationen über die Formeinheit (101) zumindest eine Information umfassen, die ausgewählt ist aus der Gruppe bestehend aus Informationen über Vorhandensein oder Nichtvorhandensein eines Schiebekerns in der Formeinheit (101), Informationen über die Anzahl an Teilungen der Formeinheit (101), Informationen über ein Vorsprungsausmaß eines Auswerferstifts in Bezug auf die Formeinheit (101) und Informationen darüber, ob eine Auswerfereinheit für die Formeinheit (101) verwendet werden kann oder nicht.

7. Spritzgießmaschine, umfassend die Anzeigevorrichtung nach einem der Ansprüche 1 bis 6.

## Revendications

1. Un dispositif d'affichage qui est utilisé dans le cadre de l'opération d'une machine de moulage par injection (1) qui injecte un matériau de moulage dans une unité de moulage (101), le dispositif d'affichage comprenant :
une unité d'affichage configurée pour afficher une pluralité d'objets d'opération (4) représentant des opérations devant être mises en œuvre dans le cadre d'un processus de moulage de la machine de moulage par injection (1) ;
une unité d'entrée à laquelle une sélection et une disposition de l'objet d'opération (4) sont introduites par un opérateur afin de construire un réseau des objets d'opération (4) en vue d'amener la machine de moulage par injection (1) à mettre en œuvre une série d'opérations ; et
une unité de commande configurée pour fournir, à l'opérateur, des suggestions pour aider à la construction du réseau des objets d'opération (4), sur la base d'au moins une information parmi des informations sur une relation avec un objet d'opération déjà disposé (4) et des informations sur l'unité de moulage (101), l'information sur l'unité de moulage (101) étant définie à l'avance selon l'unité de moulage (101) et étant stockée dans une unité de stockage ;
dans lequel l'unité d'affichage est configurée pour afficher un écran de réglage (3) qui inclut :
une zone de sélection (Ac) dans laquelle une pluralité d'objets d'opération sélectionnables (4) est affichée ; et
une zone de réseau (As) dans laquelle une pluralité d'espaces de disposition (5), dans lesquels l'objet d'opération (4) sélectionné à partir de la zone de sélection (Ac) par l'opérateur peut être disposé, est agencée dans l'ordre d'un flux du processus de moulage ;
dans lequel au moins l'une des suggestions est une suggestion visuellement reconnaissable qui est affichée sur l'unité d'affichage ; et
dans lequel, lorsque l'opérateur sélectionne l'espace de disposition (5) dans lequel l'objet d'opération (4) n'est pas disposé, parmi les espaces de disposition (5) de la zone de réseau (As), en tant que la suggestion visuellement reconnaissable, l'unité de commande est configurée de manière à amener un objet d'opération de prédiction ou une pluralité d'objets d'opération de prédiction (4a) aptes à être disposés dans les espaces de disposition (5) à être affichés sur la base des informations.

2. Le dispositif d'affichage selon la revendication 1, dans lequel les informations sur la relation avec l'objet d'opération déjà disposé (4) incluent des informations sur une contrainte à propos de la relation entre un objet d'opération (4) que l'opérateur essaie de disposer, et l'objet d'opération déjà disposé (4), en tant qu'une opération devant être mise en œuvre en même temps que, ou avant, ou après, l'objet d'opération (4) dans la série d'opérations du processus de moulage.

3. Le dispositif d'affichage selon la revendication 1 ou 2, dans lequel au moins l'une des suggestions est une suggestion visuellement reconnaissable qui est affichée sur l'unité d'affichage ; et
dans lequel, en tant que la suggestion visuellement reconnaissable, une suggestion relative à la disposition ou non de l'objet d'opération (4) que l'opérateur tente de disposer, et une suggestion relative à un appel visant à attirer l'attention, sont affichées sur l'unité d'affichage.

4. Le dispositif d'affichage selon la revendication 1,
dans lequel, lorsque l'opérateur sélectionne un objet d'opération (4) déjà agencé dans l'espace de disposition (5) de la zone de réseau (As), en tant que la suggestion visuellement reconnaissable, l'unité de commande amène un objet d'opération de prédiction ou une pluralité d'objets d'opération de prédiction (4a), aptes à être disposés dans les espaces de disposition (5), en tant que des opérations devant être mises en œuvre en même temps que, et/ou avant, et/ou après, l'objet d'opération (4) dans la série d'opérations du processus de moulage, à être affichés sur la base des informations.

5. Le dispositif d'affichage selon la revendication 1, dans lequel l'unité de commande est configurée pour déterminer l'objet d'opération de prédiction (4a), sur la base des informations sur la relation avec l'objet d'opération déjà disposé (4) et d'informations sur une fréquence de disposition de l'objet d'opération (4) dans les espaces de disposition (5).

6. Le dispositif d'affichage selon l'une quelconque des revendications 1 à 5, dans lequel l'information sur l'unité de moulage (101) inclut au moins une information sélectionnée à partir du groupe constitué d'informations sur une présence ou une absence d'un noyau coulissant dans l'unité de moulage (101), d'informations sur le nombre de divisions de l'unité de moulage (101), d'informations sur une quantité de saillie d'une broche d'éjection par rapport à l'unité de moulage (101), et d'informations indiquant si une unité d'éjection peut être utilisée ou non pour l'unité de moulage (101).

7. Une machine de moulage par injection comprenant le dispositif d'affichage selon l'une quelconque des revendications 1 à 6.
